# EUROPÄISCHE PATENTSCHRIFT

(11) **EP 2 405 232 B1**
(45) Veröffentlichungstag und Bekanntmachung des Hinweises auf die Patenterteilung: **28.02.2024**
(21) Anmeldenummer: 11005429.3
(22) Anmeldetag: 02.07.2011
(51) Int. Cl.: F42B 12/36, F41G 7/30, H04B 7/185, F42B 15/01, F42B 15/08

(54) **Verfahren zur Datenübertragung zwischen einer Basisstation und einem Flugkörper sowie Flugkörper zur Durchführung dieses Verfahrens**
Method for transferring data between a base station and a missile and missile for performing this method
Méthode de transmission de données entre une station de base et un corps volant, ainsi que corps volant destiné à l'utilisation de ce procédé

(30) Priorität: 08.07.2010 DE 102010026452
(43) Veröffentlichungstag der Anmeldung: 11.01.2012
(73) Patentinhaber: MBDA Deutschland GmbH, 86529 Schrobenhausen (DE)
(72) Erfinder: UNGER, Timo, 80997 München (DE)
(74) Vertreter: Isarpatent

(56) Entgegenhaltungen:
- EP-A1- 1 225 413
- EP-A1- 1 294 135
- EP-A2- 1 017 188
- JP-A- 2010 147 921
- US-A1- 2006 239 365
- US-B1- 6 712 312

## Beschreibung

### TECHNISCHES GEBIET

Die vorliegende Erfindung betrifft ein Verfahren zur Datenübertragung zwischen einer Basisstation und einem zum Empfang der Daten bestimmten Flugkörper, der Teil einer Gruppe von im Flug zu einem Zielgebiet befindlichen Flugkörpern ist und zu dem von der Basisstation keine Sichtlinienverbindung besteht. Die Erfindung betrifft weiterhin einen Flugkörper zur Durchführung des erfindungsgemäßen Verfahrens.

### HINTERGRUND DER ERFINDUNG

Die Steuerung von Flugkörpern von einer Basisstation, die beispielsweise eine stationäre oder mobile Bodenstation, eine Station auf einer fliegenden Trägerplattform oder auf einer schwimmenden Trägerplattform sein kann, über große Entfernungen erfolgt häufig per Datenlink, also über eine Funkverbindung, mittels der Daten von der Basisstation an den Flugkörper gesandt werden und mittels der Daten vom Flugkörper, beispielsweise Bilddaten einer im Flugkörper vorhandenen Bilderfassungseinrichtung, an die Basisstation zurück übertragen werden. Diese Datenlink-Verbindung ist problemlos möglich, wenn von der Basisstation eine Sichtlinienverbindung zum fliegenden Flugkörper besteht.

In Szenarien, in denen eine Sichtlinienverbindung zwischen der Basisstation und dem Flugkörper nicht gewährleistet ist, wie dies häufig bei einem Boden-Boden-Flugkörper vorkommt, der von einer bodengestützten Basisstation gesteuert wird, kann eine derartige Datenlinkverbindung in der Regel aufgrund von Geländebeschaffenheiten nicht aufrecht erhalten werden. Derartige Flugkörper werden daher häufig mittels einer drahtgestützten oder glasfasergestützten Datenverbindung gesteuert. Für diese Technik ist jedoch ein hoher logistischer und mechanischer Aufwand zur Nachführung des Drahtes beziehungsweise der Glasfaserleitung erforderlich. Auch ist die Reichweite einer derartigen kabelgestützten Verbindung zwischen der Basisstation und dem Flugkörper eingeschränkt. Auch die Topologie des Einsatzgebietes verhindert häufig eine derartige kabelgebundene Flugkörpersteuerung.

Es ist auch bekannt, Flugkörper von einer Basisstation aus über Relaisstationen, beispielsweise über Satelliten-Relaisstationen, zu steuern, doch ist es hierfür erforderlich, dass eine Relaisstation an einer geeigneten Position zur Verfügung steht und auch die Übertragungszeiten der Datensignale über die Relaisstation, zum Beispiel über den Satelliten, sorgen für Signallaufzeitverzögerungen, die für eine schnelle Reaktion der Steuerung des Flugkörpers hinderlich sein können.

Die EP 1 225 413 A1 zeigt ein System, bei welchem ein vorausfliegender Flugkörper Bilddaten indirekt über nachfolgende Flugkörper an eine Basisstation übermittelt, wobei basierend auf den Bilddaten Steuerdaten für die nachfolgenden Flugkörper erstellt werden, die direkt von der Basisstation an die nachfolgenden Flugkörper übertragen werden.

### DARSTELLUNG DER ERFINDUNG

Es ist daher die Aufgabe der vorliegenden Erfindung, ein gattungsgemäßes Verfahren anzugeben, das es gestattet, mit möglichst wenig Aufwand eine drahtlose Flugkörpersteuerung von einer Basisstation aus zu ermöglichen, die auch dann zuverlässig funktioniert, wenn zwischen der Basisstation und dem Flugkörper eine Sichtlinienverbindung besteht. Eine weitere Aufgabe ist es, einen dafür geeigneten Flugkörper anzugeben.

Der auf das Verfahren gerichtete Teil der Aufgabe wird durch das im Patentanspruch 1 angegebene Verfahren und einen Flugkörper mit den Merkmalen des Patentanspruchs 3 gelöst.

### VORTEILE

Bei dem erfindungsgemäßen Verfahren wird einer der Flugkörper, die noch eine Sichtlinienverbindung zur Basisstation aufweisen, als Relaisstation verwendet, um die Daten von der Basisstation zu dem Flugkörper zu übertragen, der zum Empfang der Daten bestimmt ist. Mit diesem erfindungsgemäßen Verfahren ist es möglich, eine energieeffiziente und leistungsstarke Datenfunkverbindung zwischen der Basisstation und dem zum Empfang der Daten bestimmten Flugkörper auch über große Entfernungen herzustellen, ohne dass eine direkte Sichtverbindung zwischen den beiden endgültigen Kommunikationspartnern vorhanden sein muss. Es wird durch dieses Verfahren ermöglicht, Ziele in einem nicht von der Basisstation einsehbaren Gebiet kontrolliert durch manuelle Bedienung des Flugkörpers, also durch eine sogenannte "Man-In-The-Loop"-Steuerung, zu bekämpfen.

Dabei erfolgt die Übertragung der Daten vom ersten Flugkörper zu dem zum Empfang der Daten bestimmten Flugkörper über zumindest einen weiteren Flugkörper der Gruppe von Flugkörpern. Bei einer derartigen sogenannten "Multihop"-Übertragung der Daten zwischen der Basisstation und dem zum Empfang der Daten bestimmten Flugkörper dient somit mindestens ein weiterer Flugkörper der Gruppe von Flugkörpern als Relaisstation zwischen der Basisstation und dem zum Empfang der Daten bestimmten Flugkörper, der sich außerhalb des Sichtbereichs der Basisstation befindet. Auf diese Weise kann die Sendeleistung der entsprechenden Sendeeinheit des jeweiligen Flugkörpers auch bei großen Entfernungen zwischen der Basisstation und dem zum Empfang der Daten bestimmten Flugkörper gering gehalten werden, sodass der Energieverbrauch für die Datenübertragung beziehungsweise Datenweiterleitung durch den jeweiligen Flugkörper ebenfalls gering gehalten werden kann. Im Idealfall besitzen alle Flugkörper der Gruppe von Flugkörpern jeweils eine Sende- und Empfangseinheit und können in beliebiger Raumrichtung Signale empfangen und senden.

Darüber hinaus empfängt der weitere Flugkörper die Daten sowohl auf einem ersten Übertragungsweg vom ersten Flugkörper oder von einem vorhergehenden weiteren Flugkörper, als auch auf einem zweiten Übertragungsweg direkt von der Basisstation. Eine Signalverarbeitungseinrichtung im weiteren Flugkörper kombiniert die auf beiden Übertragungswegen empfangenen Signale derart, dass Diversitätsgewinne erzielt werden. Eine solche Kombination kann beispielsweise mittels bekannter Verfahren wie Maximum-Ratio-Combining oder Joint-Decoding erfolgen. Diese vorteilhafte Weiterbildung des erfindungsgemäßen Verfahrens verringert die Fehlerwahrscheinlichkeit und verbessert somit die Qualität der Übertragung.

Erfindungsgemäß ist das Verfahren zudem dann, wenn die Datenübertragung zwischen der Basisstation und dem zum Empfang der Daten bestimmten Flugkörper bidirektional erfolgt, wobei die Datenübertragung von dem zum Empfang der Daten bestimmten Flugkörper zurück zur Basisstation in umgekehrter Weise über den zumindest einen weiteren Flugkörper und den ersten Flugkörper erfolgt. Durch diese Rückübertragung von Daten zur Basisstation kann beispielsweise ein Bildsignal, dass von dem zum Empfang der Daten bestimmten Flugkörper oder auch von einem anderen Flugkörper der Gruppe aufgenommen wird, zurück zur Basisstation übertragen werden, sodass die Bedienperson, die in der Basisstation die Flugkörper steuert, zielnah Aufklärungsdaten und gegebenenfalls Aufklärungsbilder erhält, auch wenn sich das Ziel und die dem Ziel nahen Flugkörper nicht in Sichtlinienverbindung zur Basisstation befinden. Dies ermöglicht es, das erfindungsgemäße Verfahren in hochdynamischen Szenarien, nämlich beispielsweise bei der Bekämpfung von bewegten Zielen einzusetzen.

Auch die Basisstation empfängt die zurückübertragenen Daten sowohl auf einem ersten Übertragungsweg vom ersten Flugkörper, als auch auf einem zweiten Übertragungsweg vom vorhergehenden weiteren Flugkörper parallel, sodass eine Signalverarbeitungseinrichtung in der Basisstation die auf beiden Übertragungswegen empfangenen Daten derart miteinander kombinieren kann, dass Diversitätsgewinne erzielt werden. Somit kann auch für die Daten-Rückübertragung gewährleistet werden, dass nur die kombinierten Daten in der Basisstation weiterverarbeitet werden.

Besonders vorteilhaft wird das erfindungsgemäße Verfahren dann eingesetzt, wenn die Flugkörper der Gruppe in einer Reihe aufeinander folgend fliegen und wenn die Daten von einem Flugkörper der Reihe nach zum nächsten Flugkörper der Reihe weitergesendet werden. Bei einem derartigen, beispielsweise im Falle eines Salvenschusses entstehenden Szenario wird es durch das erfindungsgemäße Verfahren ermöglicht, erst nach dem Abschuss der Flugkörper aufgrund der durch das erfindungsgemäße Verfahren ermöglichten bidirektionalen Datenübertragung den zuerst abgeschossenen Flugkörper und folglich auch die nachfolgenden Flugkörper der Reihe nach auf ein jeweiliges Ziel aufzuschalten, wodurch die Treffsicherheit bei nicht in Sichtlinienverbindung zur Basisstation liegenden Zielen deutlich erhöht wird.

Erfindungsgemäß werden von der Basisstation zu den Flugkörpern Daten gesandt, die Steuerungsdaten für mehrere Flugkörper der Gruppe enthalten. In diesem Fall leitet jeder als Relaisstation arbeitende Flugkörper nur die nicht für ihn bestimmten Steuerungsdaten an den nächsten Flugkörper weiter. Die für ihn selbst bestimmten Steuerungsdaten werden der Steuerungseinrichtung des betreffenden Flugkörpers zugeführt. Auf diese Weise können in einem Datenstrom Steuerungsdaten für mehrere oder für alle Flugkörper der Gruppe übertragen werden ohne dass jeder Flugkörper von der Basisstation direkt angefunkt werden muss. Die Flugkörper bilden auf diese Weise eine Art drahtloses Bus-System.

Im Sinne der Erfindung ist auch, wenn die von den Flugkörpern zur Basisstation gesandten Daten Bilddaten und/oder Sensordaten von zumindest einem Flugkörper, vorzugsweise von mehreren Flugkörpern, enthalten, wobei der jeweilige Flugkörper die von ihm aufgenommenen Bilddaten und/oder Sensordaten den von ihm empfangenen Bilddaten und/oder Sensordaten hinzufügt und zusammen mit diesen an den nächsten Flugkörper beziehungsweise an die Basisstation weiterleitet. Dieses Verfahren schaffen auch für die Datenrücksendung von den Flugkörpern zur Basisstation eine Art Bus-System, auf welchem die von zumindest einem Flugkörper erfassten Bilddaten und/oder Sensordaten zur Basisstation übertragen werden. Dabei ist es besonders von Vorteil, wenn auch die anderen Flugkörper, die als Relaisstation dienen, oder zumindest einige davon, von ihnen aufgenommenen Bilddaten und/oder Sensordaten ebenfalls auf diesem Weg an die Basisstation übertragen.

Bei dem Flugkörper: gemäß Anspruch 3 zur Durchführung eines erfindungsgemäßen Verfahrens mit unter anderem einer Datenempfangseinrichtung, einer Signalverarbeitungseinrichtung zur Bearbeitung der in den empfangenen Daten enthaltenen Signale und einer Datensendeeinrichtung, ist die Signalverarbeitungseinrichtung ausgebildet ist, um Steuerungsdaten für den Flugkörper aus den in den empfangenen Daten enthaltenen Signalen herauszufiltern und einer Steuerungseinrichtung des Flugkörpers zuzuleiten. Dieser Flugkörper ermöglicht es, als Relaisstation Daten, die er von anderen Flugkörpern oder von der Basisstation empfängt, einerseits an weitere Flugkörper weiterzuleiten und andererseits mittels der Signalverarbeitungseinrichtung daraufhin zu überprüfen, ob in dem empfangenen Datenstrom auch für die eigene Steuerung vorgesehene Daten enthalten sind. Diese Daten können dann in der Signalverarbeitungseinrichtung ausgefiltert und an die Steuerungseinrichtung des Flugkörpers weitergeleitet werden. Des Weiteren ist die Signalverarbeitungseinrichtung auch in der Lage, die Wahrscheinlichkeit des Auftretens von Fehlern zu reduzieren, falls die empfangenen Daten auf zwei unterschiedlichen Wegen doppelt empfangen wurden. In diesem Fall kann die Signalverarbeitungseinrichtung die auf beiden Übertragungswegen empfangenen Signale derart kombinieren, dass Diversitätsgewinne erzielt werden können. Eine solche Kombination kann, wie bereits dargelegt wurde, beispielsweise mittels bekannter Verfahren wie Maximum-Ratio-Combining oder Joint-Decoding erfolgen.

Ferner ist der Flugkörper auch mit einer Bilderfassungseinrichtung und/oder anderen Sensoren zur Zielerfassung versehen. Die Signalverarbeitungseinrichtung ist in diesem Fall auch dazu ausgebildet, von der Bilderfassungseinrichtung beziehungsweise den anderen Sensoren dieses Flugkörpers erfasste Bilddaten oder Sensordaten an die Basisstation entweder direkt oder über zwischengeschaltete Relais-Flugkörper zu senden oder, falls der Flugkörper bereits selbst Bild- oder Sensordaten empfangen hat, die eigenen Bild- oder Sensordaten den empfangenen Bild- oder Sensordaten hinzuzufügen und diesen gesamten Datenstrom der Bild- oder Sensordaten auf dem beschriebenen Weg zur Basisstation weiterzuleiten. Diese Weiterbildung des Flugkörpers gestattet es, den Flugkörper nicht nur als Zielbekämpfungsflugkörper, sondern auch als Aufklärungsflugkörper und zusätzlich auch als Relaisstation für die Übertragung von Aufklärungsdaten zur Basisstation hin einzusetzen. Bei Vorhandensein mehrerer mit einer Bilderfassungseinrichtung ausgestatteter Flugkörper kann der Basisstation daher eine Mehrzahl von Bilddaten und/oder Sensordaten zur Verfügung gestellt werden, sodass an der Basisstation eine oder mehrere Bedienpersonen die einzelnen Flugkörper steuern und auf unterschiedliche Ziele lenken können.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein beispielhaftes Szenario zur Anwendung des erfindungsgemäßen Verfahrens und
- Fig. 2: einen schematischen Aufbau eines erfindungsgemäßen Flugkörpers.

### DARSTELLUNG VON BEVORZUGTEN AUSFÜHRUNGSBEISPIELEN

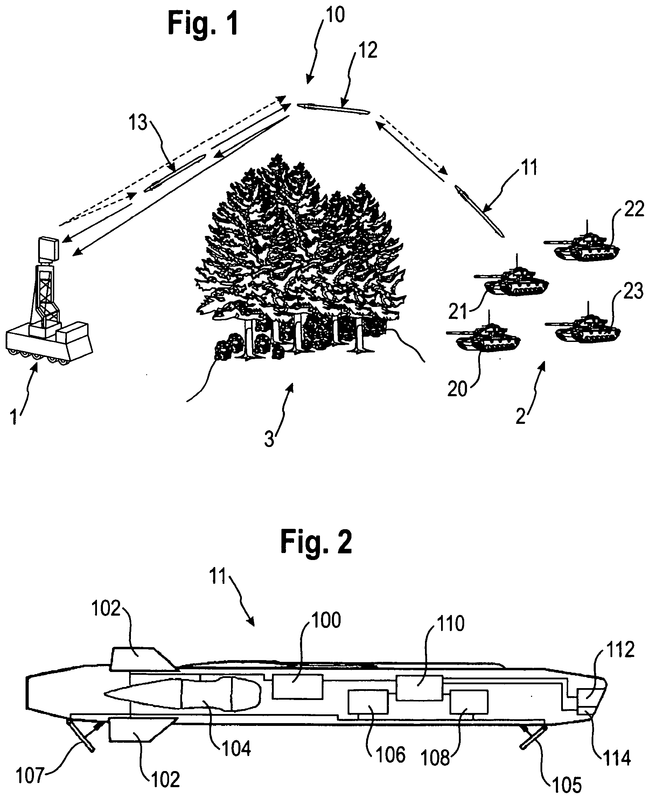

In Fig. 1 ist eine Basisstation 1 gezeigt, die beispielsweise auf einer bodengestützten Plattform vorgesehen ist. Die Basisstation kann aber genauso gut auch auf einer luftgestützten oder seegestützten Plattform angeordnet sein.

Fig. 1 zeigt ebenfalls ein Zielgebiet 2 mit einer Mehrzahl von Zielen 20, 21, 22, 23, die hier durch Panzer symbolisiert sind. Zwischen der Basisstation 1 und dem Zielgebiet 2 liegen topologische Formationen 3, die hier beispielsweise durch einen baumbewachsenen Berg dargestellt sind und die eine direkte Sichtlinienverbindung zwischen der Basisstation 1 und dem Zielgebiet 2 verhindern.

Von einer - nicht gezeigten - Startvorrichtung, die sich auf der Seite der Basisstation 1 befindet, sind mehre Flugkörper 11, 12, 13, die eine Gruppe 10 von Flugkörpern bilden, gestartet worden. Diese Flugkörper 11, 12, 13 befinden sich zwischen der Basisstation 1 und dem Zielgebiet 2.

Wie aus Fig. 1 zu erkennen ist, besteht von der Basisstation 1 eine Sichtlinienverbindung zu den Flugkörpern 12 und 13 nicht jedoch zum Flugkörper 11, der sich bereits in der Nähe des Zielgebiets 2 befindet. Um ein vorgegebenes Ziel 20, 21, 22 oder 23 im Zielgebiet 2 zu treffen, ist es anzustreben, dass der dem Zielgebiet 2 nächste Flugkörper 11 von der Bedienperson in der Basisstation sicher in das ausgewählte Ziel gesteuert wird. Dazu ist es erforderlich, dass die von der Bilderfassungseinrichtung des Flugkörpers 11 aufgenommenen Videodaten zur Basisstation 1 übertragen werden und dass als Reaktion auf diese übertragenen Videodaten Steuerbefehlsdaten von der Basisstation 1 zum Flugkörper 11 übertragen werden.

Um Videodaten von einem Flugkörper zur Basisstation übertragen zu können, werden sehr hohe Datenraten und damit breite Frequenzbänder benötigt. Diese hohen Bandbreiten sind allerdings nur bei hohen Frequenzen im Gigahertzbereich verfügbar. Signale in diesem Frequenzbereich werden allerdings aufgrund ihrer kleinen Wellenlänge besonders stark von Hindernissen gedämpft. Da bei dem in Fig. 1 dargestellten Szenario keine Sichtlinienverbindung zwischen dem Flugkörper 11 und der Basisstation 1 besteht, ist eine Videoübertragung vom Flugkörper 11 zur Basisstation 1 problematisch, wenn nicht sogar unmöglich, da sowohl das zur Verfügung stehende Frequenzband, als auch die Entfernung und die zwischen dem Flugkörper 11 und der Basisstation 1 befindlichen Hindernisse zu einer zu starken Signaldämpfung führen. Diese Signaldämpfung steigt grundsätzlich mit steigender Entfernung und steigender Frequenz an.

In dem in Fig. 1 gezeigten Beispiel sind die Flugkörper 11, 12, 13 der Reihe nach im Salvenschuss gestartet worden und befinden sich daher jeweils zueinander in etwa der gleichen Entfernung. Da jeder der Flugkörper mit einer eigenständigen Sende- und Empfangseinrichtung versehen ist, kann mittels der Flugkörper 11, 12, 13 und der Basisstation 1 ein Ad-hoc-Netzwerk aufgebaut werden, in welchem die Basisstation 1 und alle in der Luft befindlichen Flugkörper 11, 12, 13 untereinander über ihre jeweilige Sende- und Empfangseinheit Daten austauschen können. Erfindungsgemäß werden sogenannte Multihops zugelassen, was bedeutet, dass die Daten über die Sende- und Empfangseinheiten mehrerer Flugkörper, also über mehrere Relaisstationen, von der Basiseinheit 1 zu dem zum Empfang der Daten bestimmten Flugkörper 11 und entsprechend auch zurück zur Basisstation gesendet werden können. Sowohl die Übertragung der Steuerungsdaten von der Basisstation 1 zum Flugkörper 11 oder zu einem der anderen Flugkörper 12, 13, als auch die Übertragung der Sensordaten oder Videodaten vom entsprechenden Flugkörper zurück zur Basisstation 1 erfolgt somit über eine oder mehrere Relaisstationen.

Wenn die entsprechenden Datensignale nur von jedem Flugkörper zum räumlich benachbarten Flugkörper gesendet beziehungsweise von diesem empfangen werden müssen, so sind nur geringe Entfernungen zu überbrücken, die jeweils auch einer Sichtlinienverbindung zwischen den einzelnen benachbarten Flugkörpern entsprechen. Es wird also eine deutlich geringere Sendeleistung als bei direkter Datenübertragung im Falle einer Nicht-Sichtlinienverbindung zwischen der Basisstation 1 und dem weit entfernten Flugkörper 11 benötigt, was zu einer höheren Energieeffizienz sowohl in der Basisstation, als auch im Flugkörper 11 führt. Die Flugkörper fungieren somit als Relaisstationen und senden die empfangenen Daten - unabhängig von der Übertragungsrichtung - zum nächsten Flugkörper in der Kette beziehungsweise zurück zur Basisstation 1.

Die in Fig. 1 zwischen den Flugkörpern 11, 12, 13 gezeigten Linien zeigen diese Datenflüsse der gesendeten Daten. Die Pfeile mit durchgezogenen Linien betreffen dabei den Datenfluss von den Flugkörpern zur Basisstation 1 und die Pfeile mit den gestrichelten Linien betreffen den Datenfluss der Steuerungsdaten von der Basisstation 1 zu den Flugkörpern. Dabei erhält der Flugkörper 13 von der Basisstation 1 neben seinen eigenen Steuerungsdaten auch die Steuerungsdaten für die Flugkörper 11 und 12. Die Steuerungsdaten für die Flugkörper 11 und 12 leitet der Flugkörper 13 zum Flugkörper 12 weiter, welcher wiederum die für ihn bestimmten Steuerungsdaten verarbeitet und die Steuerungsdaten für den Flugkörper 11 an diesen weiterleitet. Die unterschiedlichen Übertragungen werden zum Beispiel im Frequenzmultiplexverfahren oder im Zeitmultiplexverfahren voneinander getrennt, um Interferenzen zu vermeiden.

Fig. 1 zeigt dabei auch, dass zusätzlich zur Übertragung der Steuerungsdaten Aufklärungsdaten, die von den Flugkörpern vom Zielgebiet 2 aufgenommen werden, zum Beispiel Sensordaten oder Videodaten, an die Basisstation 1 geliefert werden, wodurch der dortigen Bedienperson eine Beurteilung der Situation im Zielgebiet 2 ermöglicht wird und wodurch die Bedienperson befähigt wird, die Missionsplanung entsprechend anzupassen. Sind zum Beispiel alle Ziele bereits erfolgreich bekämpft worden, so kann die Bedienperson beispielsweise den restlichen in der Luft befindlichen Flugkörpern einen Missionsabbruch kommandieren. Auf diese Weise können auch bewegte Ziele in einem hochdynamischen Schlachtfeld-Szenario bekämpft werden und eine Zielaufschaltung der Flugkörper nach deren Start wird ermöglicht.

Die durchgezogenen Pfeile in Fig. 1 zeigen, dass die entsprechenden Bild- oder Sensordaten vom Flugkörper 11 zum Flugkörper 12 übertragen und von dort sowohl direkt an die Basisstation 1, als auch über den Flugkörper 13 als Relaisstation an die Basisstation 1 übertragen werden.

Fig. 1 zeigt auch, wie durch die Nutzung direkt übertragener Signale und über eine Relaisstation übertragener Signale die Qualität des Empfangssignals gesteigert werden kann. Der Flugkörper 12 empfängt die Steuerungsdaten (gestrichelter Pfeil) sowohl vom Flugkörper 13, als auch direkt von der Basisstation 1. Dieser doppelte Empfang der gleichen Daten über zwei voneinander unabhängige Wege führt bei entsprechender Signalverarbeitung im Flugkörper 12 zu einer geringeren Fehlerwahrscheinlichkeit der Daten, wodurch die Übertragungsqualität gesteigert wird. Im Flugkörper 12 werden dazu die direkt von der Basisstation 1 empfangenen Daten mit den über den Flugkörper 13 empfangenen Daten in einer Signalverarbeitungseinrichtung miteinander derart kombiniert, dass Diversitätsgewinne erzielt werden. Eine solche Kombination kann beispielsweise mittels bekannter Verfahren wie Maximum-Ratio-Combining oder Joint-Decoding erfolgen..

Fig. 2 zeigt einen Flugkörper 11 zur Durchführung des erfindungsgemäßen Verfahrens. Auch die anderen Flugkörper 12, 13 sind in derselben Weise ausgestaltet.

Der Flugkörper 11 ist mit einer Steuerungseinrichtung 100 versehen, die ausgebildet ist, um Steuerungssignale zu empfangen und in Steuerbefehle für Steuervorrichtungen, beispielsweise aerodynamische Ruder 102, und/oder eine nur schematisch dargestellte Antriebseinrichtung 104 umzusetzen und diese Steuerbefehle dorthin weiterzuleiten.

Der Flugkörper weist weiterhin eine Datenempfangseinrichtung 106 und eine Datensendeeinrichtung 108 auf, denen eine vordere Sende- und Empfangsantenne 105 sowie eine hintere Sende- und Empfangsantenne 107 funktional zugeordnet sind. Auf diese Weise kann der Flugkörper 11 sowohl von hinten Daten empfangen und Daten nach hinten senden, als auch Daten von vorne empfangen und nach vorne senden.

Die Datenempfangseinrichtung 106 und die Datensendeeinrichtung 108 sind mit jeweils mit einer Signalverarbeitungseinrichtung 110 zur bidirektionalen Datenübertragung verbunden. Auf diese Weise können empfangene Daten von der Datenempfangseinrichtung 106 über die Signalverarbeitungseinrichtung 110 zur Datensendeeinrichtung 108 geleitet werden, von wo aus sie dann über die der entsprechenden Senderichtung zugeordnete Sende-/Empfangsantenne weitergesendet werden.

Der Flugkörper 11 ist weiterhin mit einer Bilderfassungseinrichtung 112 sowie mit anderen Sensoren zur Zielerfassung, beispielsweise einem Infrarotsensor 114, versehen. Auch die Bilderfassungseinrichtung 112 und der Infrarotsensor 114 beziehungsweise die anderen Sensoren zur Zielerfassung sind mit der Signalverarbeitungseinrichtung 110 zur Datenübertragung verbunden, sodass die Bilddaten beziehungsweise die Sensordaten zur Signalverarbeitungseinrichtung 110 übertragen werden können. In der Signalverarbeitungseinrichtung 110 werden die erfassten Bild- und/oder Sensordaten dem von der Datenempfangseinrichtung 106 empfangenen Datenstrom hinzugefügt und mit diesem über die Datensendeeinrichtung 108 an die nächste Relaisstation oder unmittelbar an die Basisstation 1 weiter gesendet.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

### Es bezeichnen:

- 1: Basisstation
- 2: Zielgebiet
- 3: topologische Formationen
- 10: Gruppe von Flugkörpern
- 11: Flugkörper
- 12: Flugkörper
- 13: Flugkörper
- 20: Ziel
- 21: Ziel
- 22: Ziel
- 23: Ziel
- 100: Steuerungseinrichtung
- 102: aerodynamische Ruder
- 104: Antriebseinrichtung
- 105: vordere Empfangsantenne
- 106: Datenempfangseinrichtung
- 107: hintere Empfangsantenne
- 108: Datensendeeinrichtung
- 110: Signalverarbeitungseinrichtung
- 112: Bilderfassungseinrichtung
- 114: Infrarotsensor

## Patentansprüche

1. Verfahren zur Datenübertragung zwischen einer Basisstation (1) und einem zum Empfang der Daten bestimmten Flugkörper (11), der Teil einer Gruppe (10) von im Flug zu einem Zielgebiet (2) befindlichen Flugkörpern (11, 12, 13) ist und zu dem von der Basisstation (1) keine Sichtlinienverbindung besteht, mit den Schritten:
a) Übertragen der Daten von der Basisstation (1) zu einem ersten Flugkörper (13) der Gruppe (10), zu dem von der Basisstation (1) Sichtlinienverbindung besteht, und
b) Übertragen der Daten von diesem ersten Flugkörper (13) zu dem zum Empfang der Daten bestimmten Flugkörper (11),
wobei die von der Basisstation (1) zu den Flugkörpern (11, 12, 13) gesandten Daten Steuerungsdaten für mehrere Flugkörper (11, 12, 13) der Gruppe (10) enthalten, und dass jeder als Relaisstation arbeitende Flugkörper (13, 12) der Gruppe (10) von Flugkörpern (11, 12, 13) nur die nicht für ihn bestimmten Steuerungsdaten an den nächsten Flugkörper (12, 11) weiterleitet,
wobei die Übertragung der Daten vom ersten Flugkörper (13) zu dem zum Empfang der Daten bestimmten Flugkörper (11) über zumindest einen weiteren Flugkörper (12) der Gruppe (10) von Flugkörpern erfolgt,
wobei die Datenübertragung zwischen der Basisstation (1) und dem zum Empfang der Daten bestimmten Flugkörper (11) bidirektional erfolgt, wobei die Datenübertragung von dem zum Empfang der Daten bestimmten Flugkörper (11) zurück zur Basisstation (1) in umgekehrter Weise über den zumindest einen weiteren Flugkörper (12) und den ersten Flugkörper (13) erfolgt, und
wobei die zur Basisstation (1) gesandten Daten, welche durch eine Bilderfassungseinrichtung (112) und/oder einen Sensor (114) der Flugkörper (11, 12, 13) erfasst werden, Bilddaten und/oder Sensordaten von mehreren Flugkörpern (11, 12, 13) enthalten, wobei der jeweilige Flugkörper (12, 13) die von ihm aufgenommenen Bilddaten und/oder Sensordaten den von ihm empfangenen Bilddaten und/oder Sensordaten hinzufügt und zusammen mit diesen an den nächsten Flugkörper (13) beziehungsweise an die Basisstation (1) weiterleitet; und
wobei der weitere Flugkörper (12) die Daten sowohl auf einem ersten Übertragungsweg vom ersten Flugkörper (13) oder von einem vorhergehenden weiteren Flugkörper, als auch auf einem zweiten Übertragungsweg direkt von der Basisstation (1) empfängt,
wobei eine Signalverarbeitungseinrichtung im weiteren Flugkörper (12) die auf beiden Übertragungswegen empfangenden Daten derart miteinander kombiniert, dass Diversitätsgewinne erzielt werden, und
wobei nur die kombinierten Daten zum nächsten Flugkörper (11) weitergeleitet werden, und/oder
wobei die Basisstation (1) die zurück übertragenen Daten sowohl auf einem ersten Übertragungsweg vom ersten Flugkörper (13), als auch auf einem zweiten Übertragungsweg vom vorhergehenden weiteren Flugkörper (12) empfängt,
wobei eine Signalverarbeitungseinrichtung in der Basisstation (1) die auf beiden Übertragungswegen empfangenden Daten derart miteinander kombiniert, dass Diversitätsgewinne erzielt werden, und
wobei nur die kombinierten Daten in der Basisstation (1) weiterverarbeitet werden.

2. Verfahren nach Anspruch 1,
**dadurch gekennzeichnet,**
**dass** die Flugkörper (11, 12, 13) der Gruppe (10) in einer Reihe aufeinander folgend fliegen und dass die zu übertragenden Daten von einem Flugkörper der Reihe zum nächsten Flugkörper der Reihe weitergesendet werden.

3. Flugkörper (11) zur Durchführung eines erfindungsgemäßen Verfahrens nach einem der vorherigen Ansprüche, mit einer Datenempfangseinrichtung (106) zum Empfang von Daten, welche von einer Basisstation (1) oder weiteren Flugkörpern (12, 11) ausgesendet wurden, einer Signalverarbeitungseinrichtung (110) zur Bearbeitung der in den empfangenen Daten enthaltenen Signale und einer Datensendeeinrichtung (108),
wobei die Datenempfangseinrichtung (106) und die Datensendeeinrichtung (108) jeweils mit der Signalverarbeitungseinrichtung (110) zur bidirektionalen Datenübertragung verbunden sind;
wobei die Signalverarbeitungseinrichtung (110) ausgebildet ist, um Steuerungsdaten für den Flugkörper (11, 12, 13) aus den in den empfangenen Daten enthaltenen Signalen herauszufiltern und einer Steuerungseinrichtung (100) des Flugkörpers (11, 12, 13) zuzuleiten, wobei die Signalverarbeitungseinrichtung (110) ausgebildet ist, nur die nicht für den als Relaisstation arbeitenden Flugkörper (12, 13) bestimmten Steuerungsdaten an einen weiteren Flugkörper (11, 12, 13) weiterzuleiten, wobei der Flugkörper (11, 12, 13) mit einer Bilderfassungseinrichtung (112) und/oder anderen Sensoren (114) zur Zielerfassung versehen ist und wobei die Signalverarbeitungseinrichtung (110) dazu ausgebildet ist, von dem Flugkörper erfasste Bild- oder Sensordaten einem an eine Basisstation gerichteten empfangenen Datenstrom hinzuzufügen und über die Datensendeeinrichtung (108) zu senden;
wobei die Signalverarbeitungseinrichtung (110) ferner ausgebildet ist, die sowohl auf einem ersten Übertragungsweg von den weiteren Flugkörpern (12, 11), als auch auf einem zweiten Übertragungsweg direkt von der Basisstation (1) doppelt empfangenen Daten derart zu kombinieren, dass Diversitätsgewinne erzielbar sind.

## Claims

1. Method for transmitting data between a base station (1) and a missile (11), which is intended to receive the data and is part of a group (10) of missiles (11, 12, 13) in flight towards a target area (2) and to which there is no line-of-sight connection from the base station (1), comprising the steps of:
a) transmitting the data from the base station (1) to a first missile (13), to which there is a line-of-sight connection from the base station (1), in the group (10), and
b) transmitting the data from this first missile (13) to the missile (11) intended to receive the data,
wherein the data sent from the base station (1) to the missiles (11, 12, 13) are control data for a plurality of missiles (11, 12, 13) in the group (10), and
wherein each missile (13, 12) acting as a relay station in the group (10) of missiles (11, 12, 13) passes on only the control data not intended for it to the next missile (12, 11),
wherein the transmission of the data from the first missile (13) to the missile (11) intended to receive the data takes place via at least one further missile (12) in the group (10),
wherein the data transmission between the base station (1) and the missile (11) intended to receive the data is bidirectional, the data transmission from the missile (11) intended to receive the data back to the base station (1) taking place in reverse via the at least one further missile (12) and the first missile (13), and
wherein the data sent to the base station (1), which are detected by an image capture device (112) and/or a sensor (114) of the missiles (11, 12, 13), include image data and/or sensor data from a plurality of missiles (11, 12, 13), each missile (12, 13) appending the image data and/or sensor data which it records to the image data and/or sensor data which it receives and passing them on together therewith to the next missile (13) or to the base station (1) as applicable; and
wherein the further missile (12) receives the data both on a first transmission path, from the first missile (13) or from a further, preceding missile, and on a second transmission path, directly from the base station (1), wherein a signal processing device in the further missile (12) combines the data received on the two transmission paths in such a way that diversity gains are achieved, and wherein only the combined data are passed on to the next missile (11), and/or
wherein the base station (1) receives the return-transmitted data both on a first transmission path from the first missile (13) and on a second transmission path from the further, preceding missile (12),
wherein a signal processing device in the base station (1) combines the data received on the two transmission paths in such a way that diversity gains are achieved, and wherein only the combined data are processed further in the base station (1).

2. Method according to claim 1,
**characterised**
**in that** the missiles (11, 12, 13) in the group (10) fly following one another in a row, and in that the data to be transmitting are sent onwards from one missile in the row to the next missile in the row.

3. Missile (11) for carrying out a method according to the invention according to any of the preceding claims, comprising a data receiver device (106) for receiving data which have been emitted by a base station (1) or by further missiles (12, 11), a signal processing device (110) for processing the signals contained in the received data, and a data transmitter device (108),
wherein the data receiver device (106) and the data transmitter device (108) are each connected to the signal processing device (110) for bidirectional data transmission;
wherein the signal processing device (110) is configured to filter out control data for the missile (11, 12, 13) from the signals included in the received data and to pass them to a control device (100) of the missile (11, 12, 13), the signal processing device (110) being configured to pass on only the control data not intended for the missile (12, 13) acting as a relay station to a further missile (11, 12, 13), the missile (11, 12, 13) being provided with an image capture device (112) and/or other sensors (114) for target detection, and the signal processing device (110) being configured to add image or sensor data detected by the missile to a received data stream directed towards a base station and to send them via the data transmitter device (108);
wherein the signal processing device (110) is further configured to combine the data which are received twofold, both on a first transmission path from the further missiles (12, 13) and on a second transmission path directly from the base station (1), in such a way that diversity gains can be achieved.

## Revendications

1. Procédé de transmission de données entre une station de base (1) et un missile (11) destiné à recevoir les données, qui fait partie d'un groupe (10) de missiles (11, 12, 13) se trouvant en vol vers une zone cible (2) et vers lequel il n'existe pas de liaison en ligne de visée depuis la station de base (1), comprenant les étapes suivantes :
a) transmission des données de la station de base (1) à un premier missile (13) du groupe (10), avec lequel il existe une liaison en ligne de visée depuis la station de base (1), et
b) transmission des données de ce premier missile (13) au missile (11) destiné à recevoir les données,
dans lequel les données envoyées par la station de base (1) aux missiles (11, 12, 13) contiennent des données de commande pour plusieurs missiles (11, 12, 13) du groupe (10), et
dans lequel chaque missile (13, 12) du groupe (10) de missiles (11, 12, 13) fonctionnant comme station relais ne transmet au missile suivant (12, 11) que les données de commande qui ne lui sont pas destinées,
dans lequel la transmission des données du premier missile (13) au missile (11) destiné à recevoir les données s'effectue par l'intermédiaire d'au moins un autre missile (12) du groupe (10) de missiles,
dans lequel la transmission de données entre la station de base (1) et le missile (11) destiné à recevoir les données s'effectue de manière bidirectionnelle, la transmission de données du missile (11) destiné à recevoir les données en retour vers la station de base (1) s'effectuant de manière inverse par l'intermédiaire dudit au moins un autre missile (12) et du premier missile (13), et
dans lequel les données envoyées à la station de base (1), qui sont détectées par un dispositif d'acquisition d'images (112) et/ou un capteur (114) des missiles (11, 12, 13), contiennent des données d'image et/ou des données de capteur de plusieurs missiles (11, 12, 13), le missile respectif (12, 13) ajoutant les données d'image et/ou les données de capteur qu'il a enregistrées aux données d'image et/ou aux données de capteur qu'il a reçues et les transmettant avec celles-ci au missile suivant (13), respectivement à la station de base (1) ; et
dans lequel l'autre missile (12) reçoit les données aussi bien sur une première voie de transmission du premier missile (13) ou d'un autre missile précédent, que sur une deuxième voie de transmission directement de la station de base (1),
dans lequel un dispositif de traitement de signaux dans l'autre missile (12) combine entre elles les données reçues sur les deux voies de transmission de telle sorte que des gains de diversité soient obtenus, et
dans lequel seules les données combinées sont transmises au missile suivant (11), et/ou
dans lequel la station de base (1) reçoit les données transmises en retour aussi bien sur une première voie de transmission du premier missile (13) que sur une deuxième voie de transmission de l'autre missile précédent (12), dans lequel un dispositif de traitement de signaux dans la station de base (1) combine entre elles les données reçues sur les deux voies de transmission de telle sorte que des gains de diversité soient obtenus, et
dans lequel seules les données combinées sont traitées dans la station de base (1).

2. Procédé selon la revendication 1,
**caractérisé en ce**
**que** les missiles (11, 12, 13) du groupe (10) volent successivement en une série et que les données à transmettre sont transmises d'un missile de la série au missile suivant de la série.

3. Missile (11) pour la mise en œuvre d'un procédé conforme à l'invention selon l'une des revendications précédentes, comprenant un dispositif de réception de données (106) pour la réception de données qui ont été envoyées par une station de base (1) ou par d'autres missiles (12, 11), un dispositif de traitement de signaux (110) pour le traitement des signaux contenus dans les données reçues et un dispositif d'envoi de données (108),
dans lequel le dispositif de réception de données (106) et le dispositif d'envoi de données (108) sont chacun reliés au dispositif de traitement de signaux (110) pour la transmission de données bidirectionnelle ;
dans lequel le dispositif de traitement de signaux (110) est conçu pour filtrer des données de commande pour le missile (11, 12, 13) à partir des signaux contenus dans les données reçues et pour les transmettre à un dispositif de commande (100) du missile (11, 12, 13), le dispositif de traitement de signaux (110) étant conçu pour ne transmettre à un autre missile (11, 12, 13) que les données de commande qui ne sont pas destinées au missile (12, 13) fonctionnant comme station relais,
dans lequel le missile (11, 12, 13) est pourvu d'un dispositif d'acquisition d'images (112) et/ou d'autres capteurs (114) pour l'acquisition de la cible,
le dispositif de traitement de signaux (110) étant conçu pour ajouter des données d'image ou de capteur détectées par le missile à un flux de données reçu adressé à une station de base et pour les envoyer par l'intermédiaire du dispositif d'envoi de données (108) ;
dans lequel le dispositif de traitement de signaux (110) est en outre conçu pour combiner les données reçues en double aussi bien sur une première voie de transmission des autres missiles (12, 11) que sur une deuxième voie de transmission directement de la station de base (1) de telle sorte que des gains de diversité puissent être obtenus.
